# EUROPÄISCHE PATENTSCHRIFT

(11) **EP 2 342 023 B1**
(45) Veröffentlichungstag und Bekanntmachung des Hinweises auf die Patenterteilung: **04.03.2015**
(21) Anmeldenummer: 09737370.8
(22) Anmeldetag: 17.10.2009
(51) Int. Cl.: B05B 13/04, B05B 15/12, B65G 17/00, B65G 19/02, F03D 1/06, B65G 49/02

(54) **ANLAGE ZUR OBERFLÄCHENBEHANDLUNG VON GEGENSTÄNDEN**
SYSTEM FOR THE SURFACE TREATMENT OF OBJECTS
INSTALLATION DE TRAITEMENT DES SURFACES D'OBJETS

(30) Priorität: 08.11.2008 DE 102008056142
(43) Veröffentlichungstag der Anmeldung: 13.07.2011
(73) Patentinhaber: Eisenmann AG, 71032 Böblingen (DE)
(72) Erfinder: HEIM, Jürgen, D-72406 Bisingen (DE); RIEMRICH, Eckard, D-72108 Rottenburg (DE)
(74) Vertreter: Heinrich, Hanjo
(86) Internationale Anmeldenummer: PCT/EP2009/007468
(87) Internationale Veröffentlichungsnummer: WO 2010/051910

(56) Entgegenhaltungen:
- WO-A1-2008/006495
- DE-A1- 10 118 906
- DE-A1-102005 032 124
- DE-U1- 9 418 619

## Beschreibung

Die Erfindung betrifft eine Anlage zur Oberflächenbehandlung von Gegenständen mit
a) einer Behandlungskabine mit einem Eingang und einem Ausgang;
b) einem Fördersystem, welches Zug- oder Schubmittel umfasst, mittels welcher ein Gegenstand im Durchlauf in einer Transportrichtung durch die Behandlungskabine förderbar ist und dabei eine Transportwegstrecke zurücklegt;
   wobei
c) der Gegenstand in Transportrichtung eine ihm zugeordnete Transportlänge vorgibt,
d) die Zug- oder Schubmittel in Transportrichtung eine Antriebswegstrecke vorgeben.

Unter Antriebswegstrecke ist diejenige Wegstrecke zu verstehen entlang welcher die Zug- oder Schubmittel einen Antrieb des Gegenstandes bewirken. Eine derartige Anlage ist z.B. aus WO 2008/006475 A1 bekannt. Wenn, wie es bei vom Markt her bekannten derartigen Anlagen der Fall ist, als Zug- oder Schubmittel eine umlaufende Kette verwendet wird, ist die Antriebswegstrecke in der Regel die Erstreckung der Kette zwischen einer ersten Stelle, an welcher die Kette mit dem Gegenstand gekoppelt wird, und einer zweiten Stelle, an welcher diese Kopplung wieder aufgehoben wird. Bei vom Markt her bekannten Anlagen entspricht somit die von dem Gegenstand zurückgelegte Transportwegstrecke üblicherweise der Antriebswegstrecke.

Die Größe der Behandlungskabine, häufig eine Lackierkabine, in welcher der Gegenstand mit einem Lack versehen wird, ist bei vom Markt her bekannten Anlagen an die Länge und Form der zu behandelnden Gegenstände angepasst. Dies bedeutet, dass der Gegenstand vollständig in die Behandlungskabine eingebracht und dort oberflächenbehandelt wird. Anstelle einer Lackierung kann diese Behandlung auch beispielsweise ein Trocknen einer bereits aufgetragenen Beschichtung des Gegenstandes, ein Reinigen von dessen Oberfläche oder dergleichen bedeuten.

Bei der Lackierung von Gegenständen erreicht nicht der gesamte applizierte Lack den Gegenstand. Ein Teil des Lackes wird als so genannter Lackoverspray in den Innenraum der Kabine abgegeben. Um diesen aus der Kabine abzuführen, wird Luft durch die Lackierkabine geleitet, welche den Lackoverspray mit sich reißt. Die den Lack-Overspray aufnehmende Luft wird dann einer Aufbereitung zugeführt. Im Falle einer Lackierkabine als Behandlungskabine sind somit Einrichtungen zur Steuerung des Lufthaushaltes nötig.

Wenn sehr große Gegenstände lackiert werden sollen, die eine Länge von 50 m und mehr haben können, wie beispielsweise Rotorblätter für Windkraftanlagen, müssen entsprechend große Lackierkabinen gebaut werden, um diese Gegenstände vollständig aufzunehmen. Die Lackierung erfolgt mittels an und für sich bekannten Applikationsrobotern. Diese müssen mit gleich bleibender Geschwindigkeit entlang des ruhenden zu lackierenden Gegenstandes verfahrbar sein, damit alle Bereiche des Gegenstandes zuverlässig gleichmäßig beschichtet werden können. Meist werden siebenachsige Roboter eingesetzt, wobei die siebte Achse die Verfahrachse bedeutet.

Eine derartige Großraumkabine erfordert große Luftmengen, die nur mit entsprechend aufwändigen und großen und somit kostenintensiven Lüftungsanlagen gehandhabt werden können. Darüber hinaus wird die Gesamtanlage bei einem Betrieb im Durchlauf, der im Hinblick auf einen hohen Durchsatz der Anlage wünschenswert ist, sehr lang. In der Regel ist mindestens die dreifache Länge des zu beschichtenden Gegenstandes erforderlich. Neben der Lackierkabine ist einerseits ein dieser vorgelagerter und andererseits ein dieser nachgelagerter Bereich nötig, von denen jeder so lang sein muss, wie der zu lackierende Gegenstand. Nur so kann dieser ohne Schwierigkeiten vor den Eingang der Behandlungskabine bewegt und nach der Behandlung hinter dem Ausgang der Behandlungskabine von der Anlage weggefahren werden.

Um bei einer im Durchlauf betriebenen Anlage Bauraum zu sparen, kann jedoch lediglich die Behandlungskabine kürzer ausgebildet werden. Vor und hinter der Behandlungskabine gibt es keinen Spielraum.

Bei einer Behandlungskabine, insbesondere bei einer Lackierkabine, welche kürzer als der zu behandelnde Gegenstand ist, können zwar ortsfeste Applikationsroboter verwendet werden, was die Steuerung des Lackiervorganges erleichtert. Im Gegenzug muss dann jedoch der Gegenstand gleichmäßig und möglichst ruckelfrei durch die Lackierkabine und an den Applikationsrobotern vorbei gefördert werden, um eine gleichmäßige Beschichtung des Gegenstandes zu gewährleisten.

Wenn über den gesamten Transportweg eines langen Gegenstandes ein Zug- oder Schubmittel, wie eine Kette, für dessen Antrieb sorgt, wenn also die Antriebswegstrecke der Transportwegstrecke entspricht, kommt es, insbesondere bei kleinen Geschwindigkeiten, in der Regel jedoch zu einem unvermeidbaren Ruckeln während des Verfahrens des Gegenstandes. Dies kann bei einer Lackierkabine, die kürzer als der zu lackierende Gegenstand ist, jedoch nicht toleriert werden, da es so zu einem schlechteren Lackierergebnis käme.

Aufgabe der Erfindung ist es daher, eine Anlage der eingangs genannten Art so auszubilden, dass eine Behandlungskabine verwendet werden kann, welche kürzer als die Transportlänge des Gegenstandes ist, bei welcher jedoch zugleich ein ruckelfreier Transport des Gegenstandes mittels der Zug- oder Schubmittel gewährleistet ist.

Diese Aufgabe wird bei einer eingangs genannten Anlage dadurch gelöst, dass
d) das Fördersystem eine Koppeleinrichtung umfasst, mittels welcher der Gegenstand entlang der Antriebswegstrecke mit den Zug- oder Schubmitteln koppelbar ist;
e) die Antriebswegstrecke in Transportrichtung kürzer als die Transportlänge des Gegenstandes ist;
f) die Koppeleinrichtung so eingerichtet ist, dass die von dem Gegenstand zurücklegbare Transportwegstrecke länger als die Antriebswegstrecke ist.

Erfindungsgemäß wird also die Antriebswegstrecke auf eine Länge verkürzt, die kleiner als die Transportlänge des Gegenstandes ist. Somit wird ein gegenüber bekannten Anlagen verkürztes Zug- oder Schubmittel eingesetzt. Je kürzer das Zug- oder Schubmittel ist, desto geringer ist die Gefahr, dass es beim Transport des Gegenstandes zu einem unerwünschten Ruckeln kommt.

Bei einer Antriebswegstrecke, welche kürzer als die erforderliche Transportlänge des Gegenstandes ist, kann der Gegenstand bei einer unmittelbaren Kopplung mit den Zug- oder Schubmitteln jedoch nur über eine Wegstrecke mit einer Länge gefördert werden, welche der Antriebswegstrecke entspricht. Der Gegenstand muss jedoch über eine größere Strecke gefördert werden, wenn er insgesamt durch die Behandlungskabine hindurch transportiert werden soll.

Daher wird die verkürzte Antriebswegstrecke mittels der Koppeleinrichtung künstlich verlängert, wodurch der Gegenstand über eine gegenüber der Antriebswegstrecke längere Transportwegstrecke bewegt werden kann.

Vorteilhafte Weiterbildungen sind in den abhängigen Ansprüchen angegeben.

Als Zug- oder Schubmittel kann beispielsweise ein Seil dienen. Es ist jedoch günstiger, wenn die Zug- oder Schubmittel als umlaufende Förderkette ausgebildet sind, wobei die Antriebswegstrecke durch wenigstens einen Bereich eines Trums der Förderkette vorgegeben ist.

Die Verlängerung der mit den Zug- oder Schubmitteln möglichen Transportwegstrecke des Gegenstandes wird vorteilhaft erreicht, wenn die Koppeleinrichtung einen Förderschlitten umfasst, welcher
a) in Transportrichtung länger als die Antriebswegstrecke ist;
b) mehrere Mitnehmerelemente umfasst, die in Transportrichtung entlang des Förderschlittens voneinander beabstandet angeordnet sind und mit den Zug- oder Schubmitteln zusammenarbeiten können;
c) in einer Führungsstruktur in Transportrichtung verfahrbar ist.

Dabei ist es besonders günstig, wenn der Förderschlitten eine Länge hat, die in etwa der Transportlänge des Gegenstandes entspricht.

Bei dieser Ausbildung kann der Förderschlitten stets mit den Zug- oder Schubmitteln gekoppelt bleiben, auch wenn er sich in Transportrichtung oder in dazu entgegengesetzter Richtung jenseits der Antriebswegstrecke der Zug- oder Schubmittel erstreckt.

Der zu behandelnde Gegenstand kann einerseits von dem Förderschlitten getragen werden. Andererseits ist es vorteilhaft, wenn das Fördersystem wenigstens einen den Gegenstand aufnehmenden Transportwagen umfasst, welcher seinerseits mit dem Förderschlitten verbindbar ist. In diesem Fall kann der Gegenstand auf dem separat verfahrbaren Transportwagen verbleiben, wenn die Behandlung abgeschlossen ist und auf diesem einer gegebenenfalls notwendigen Nachbehandlung zugeführt werden.

Wenn die Behandlungskabine kürzer als der zu behandelnde Gegenstand ist, muss dieser zwangsläufig durch den Eingang und den Ausgang der Kabine herausragen, während er durch diese hindurch bewegt wird. Im Hinblick auf den Lufthaushalt der Kabine ist es wünschenswert, wenn die Öffnung am Ein- und Ausgang der Behandlungskabine möglichst klein ist, so dass nur wenig Abluft entweichen oder nicht konditionierte Luft von außen in die Behandlungskabine eindringen kann.

Dies kann dadurch erreicht werden, dass die Behandlungskabine an ihrem Eingang und/oder an ihrem Ausgang ein Kabinentor aufweist, welches wenigstens ein in einer ersten Richtung verfahrbares Torblatt, insbesondere ein Rolltorblatt, und wenigstens ein in einer zweiten Richtung verfahrbares Torblatt, insbesondere ein Rolltorblatt, umfasst. So kann am Eingang und/oder am Ausgang der Behandlungskabine ein Durchgang geschaffen werden, dessen Außenkontur an den jeweils im Durchgang befindlichen Abschnitt des Gegenstandes angepasst werden kann. Der zwischen den Torblättern und dem Gegenstand verbleibende Spalt wird stets möglichst klein gehalten, so dass der Luft kaum Durchtrittsmöglichkeiten geboten sind.

Dabei ist es bautechnisch insbesondere günstig, wenn die erste Richtung vertikal und die zweite Richtung horizontal verläuft.

Wenn zwei Torblätter vorhanden sind, die in der ersten Richtung verfahrbar sind, kann eine noch bessere Anpassung der Außenkontur des Durchgangs an den Gegenstand erfolgen.

Nachfolgend wird ein Ausführungsbeispiel der Erfindung anhand der Zeichnung näher erläutert. In dieser zeigen:
- Figur 1: eine Seitenansicht einer Anlage zur Oberflächenbehandlung von Gegenständen;
- Figur 2: die Anlage von Figur 1 von oben in Durchsicht neben einem zu behandelnden Rotorblatt für eine Windkraftanlage;
- Figur 3: eine der Ansicht von Figur 2 entsprechende Ansicht der Behandlungskabine neben dem vollständig dargestellten Rotorblatt von Figur 2;
- Figur 4: eine Vorderansicht der Behandlungskabine, wobei ein Bodenbereich mit einem Fördersystem zu erkennen ist;
- Figur 5: eine Detailansicht des Fördersystems von Figur 4 in dieser gegenüber größerem Maßstab;
- Figur 6: eine Detailansicht des Fördersystem in einer der Figur 1 entsprechenden Seitenansicht in dieser gegenüber größerem Maßstab;
- Figur 7: eine weitere Detailansicht des Fördersystems in nochmals größerem Maßstab;
- Figur 8: nochmals eine der Figur 4 entsprechende Ansicht des Fördersystems in dieser gegenüber größerem Maßstab;
- Figur 9: eine Detailansicht von Figur 8 in nochmals größerem Maßstab.

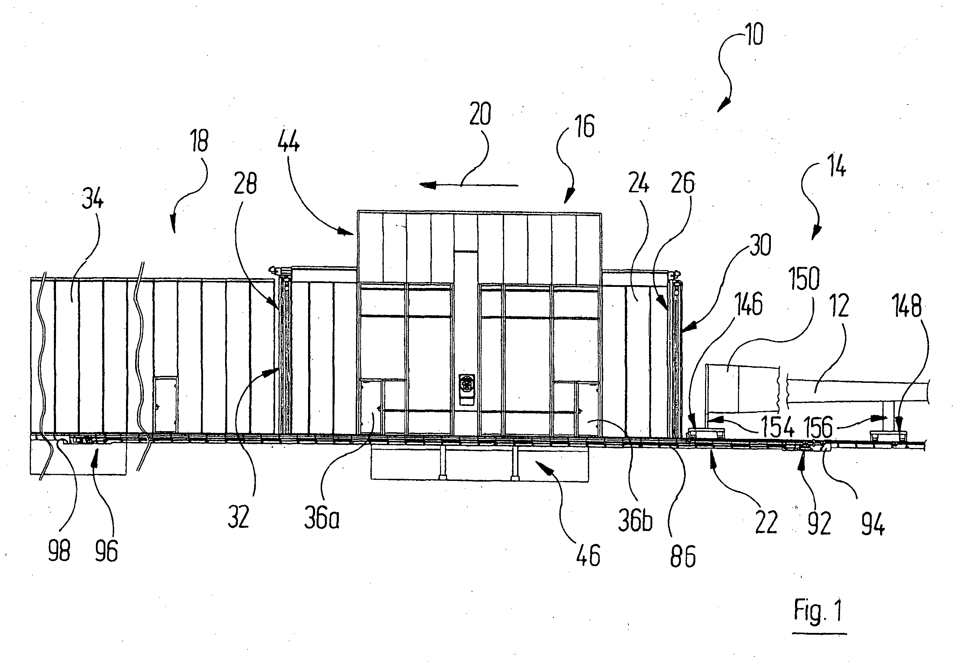

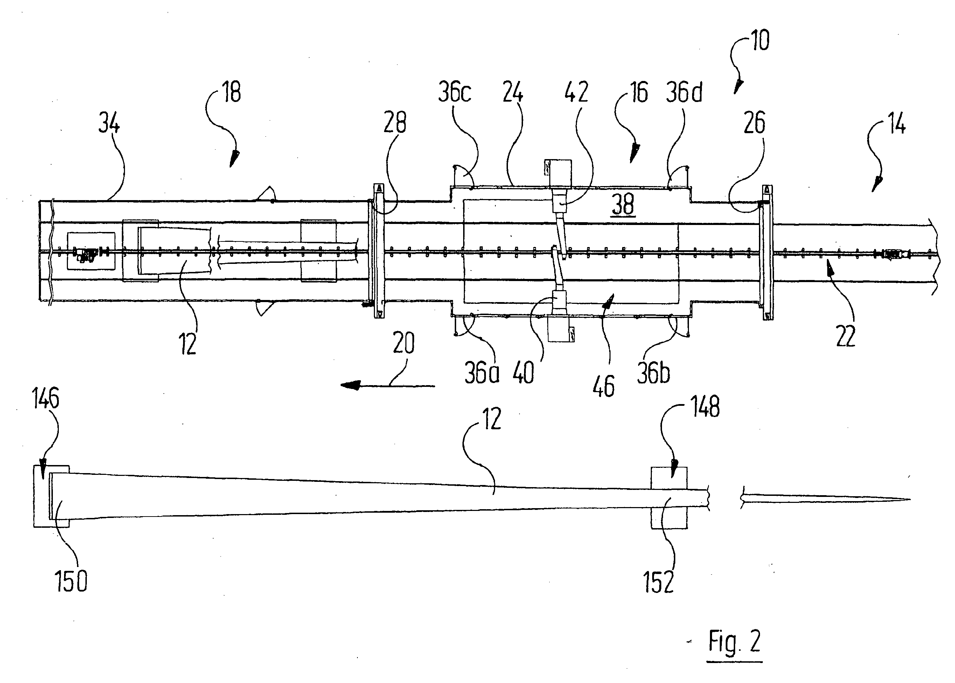

In den Figuren 1 und 2 ist eine Oberflächenbehandlungsanlage 10 gezeigt, in welcher so genannte überlange Gegenstände mit einer Länge von über 10 m im Durchlauf behandelt werden können. In den Figuren ist ein derartiger Gegenstand in Form eines Rotorblatts 12 für Windkraftanlagen gezeigt. Bei Rotorblättern für Windkraftanlagen, welche eine Länge von 50 m und mehr haben können, handelt es sich um Gegenstände mit endlicher Länge, welche abgesehen von der ihnen innewohnenden materialabhängigen Elastizität starr sind. Aus diesem Grund muss die Anlage 10, welche für solche Gegenstände konzipiert ist, anderen Kriterien genügen als beispielsweise eine Anlage zur Oberflächenbehandlung von beweglichen und gegebenenfalls endlosen Gegenständen, wie Ketten oder dergleichen.

Die Anlage 10 umfasst einen Zuführbereich 14, eine Spritzkabine 16 sowie einen Verbringungsraum 18. Diese sind in einer Transportrichtung 20 hintereinander angeordnet, in welcher das zu behandelnde Rotorblatt 12 durch die Spritzkabine 16 gefördert wird. Zur Förderung des Rotorblatts 12 ist ein Fördersystem 22 vorhanden, welches weiter unten noch näher erläutert wird. In derjenigen Lage, in welcher das Rotorblatt 12 durch die Anlage 10 bewegt wird, gibt es in Transportrichtung 20 eine dem Rotorblatt 12 zugeordnete Transportlänge vor. Dies gilt entsprechend auch für andere zu behandelnde Gegenstände.

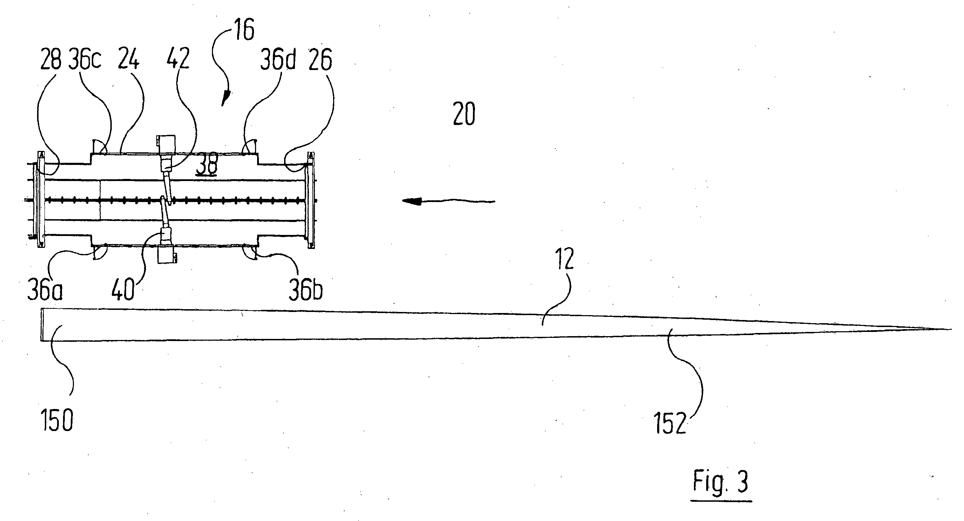

Der Zuführbereich 14 und der Verbringungsraum 18 sind in Transportrichtung 20 etwas länger als das zu behandelnde Rotorblatt 12. In Figur 3 ist die Spritzkabine 16 separat neben dem vollständig dargestellten Rotorblatt 12 gezeigt. Wie dort zu erkennen ist, hat die Spritzkabine 16 eine Länge, die deutlich geringer als diejenige des Rotorblatts 12 ist.

Die Spritzkabine 16 umfasst ein Gehäuse 24 mit einem dem Zuführbereich 14 der Anlage 10 benachbarten Eingang 26 und einem Ausgang 28 zwischen der Spritzkabine 16 und dem Verbringungsraum 18. Der Eingang 26 der Spritzkabine 16 kann mittels eines Kabinentores 30 verschlossen oder freigegeben werden. Ein dazu baugleiches Kabinentor 32 befindet sich am Ausgang 28 der Spritzkabine 16. Durch dieses kann der Durchgang von der Spritzkabine 16 zum Verbringungsraum 18, welcher seinerseits von einem Gehäuse 34 begrenzt ist, verschlossen oder freigegeben werden.

Die Spritzkabine 16 ist für Bedienpersonal über ringsum angeordnete Türen 36a, 36b, 36c und 36d von außen zugänglich, beispielsweise zu Inspektions- oder Wartungszwecken. Im Innenraum 38 der Spritzkabine 16 sind zwei mit einer Spritzpistole ausgerüstete Applikationsroboter 40 und 42 mit mindestens drei Bewegungsachsen, wie sie an und für sich bekannt sind, rechts und links des Förderweges des Rotorblattes 12 angeordnet. Die Applikationsroboter 40, 42 sind ortsfest angeordnet, d.h. sie sind nicht innerhalb der Spritzkabine 16 verfahrbar. Die größte Beweglichkeit der Applikationsroboter 40 und 42 wird erzielt, wenn diese sechs Bewegungsachsen haben, wie es an und für sich bekannt ist. Mittels der Applikationsroboter 40, 42 kann die Oberfläche des Rotorblatts 12 mit einer Beschichtung, insbesondere mit einem Lack, versehen werden.

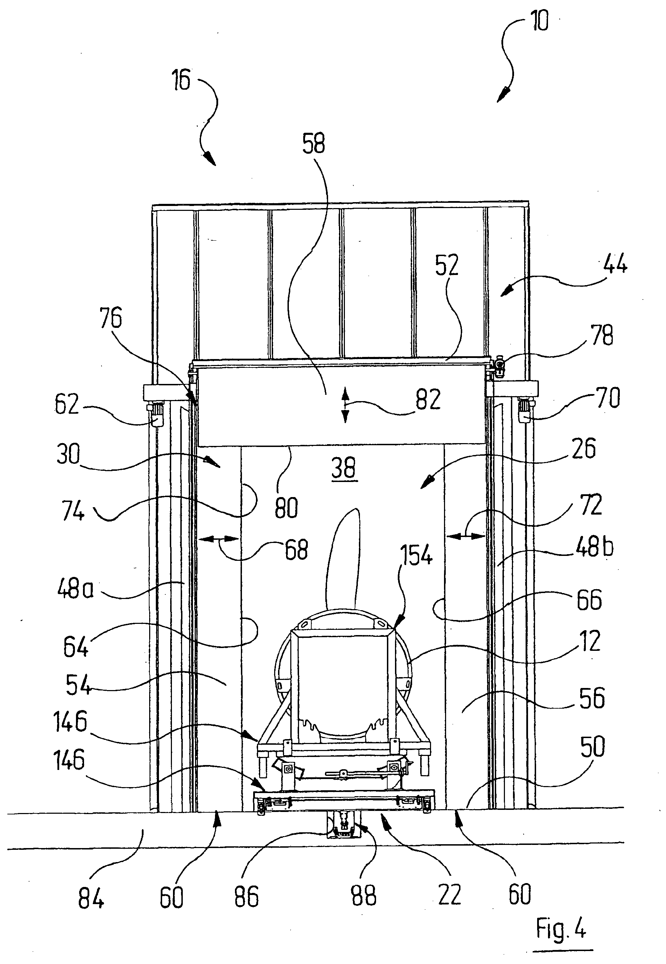

In einem Deckenbereich 44 der Spritzkabine 16 (vgl. Figuren 1 und 4) sind Komponenten untergebracht, mittels welcher der Lufthaushalt innerhalb der Spritzkabine 16 gesteuert und die benötigte Luft gegebenenfalls gereinigt, z.B. gefiltert, und/oder vorkonditioniert, beispielsweise erwärmt oder gekühlt sowie befeuchtet, werden kann. Über das Durchleiten durch Filterelemente wird die Luft gleichmäßig in der Kabine verteilt. Derartige Komponenten sind an und für sich bekannt und daher hier nicht eigens gezeigt. Der Innenraum 38 der Spritzkabine 16 kommuniziert darüber hinaus mit einem Kanalsystem, über welches Luft durch die Spritzkabine 16 geleitet werden kann und welches lediglich in den Figuren 1 und 2 durch einen Kanalbereich 46 unterhalb der Spritzkabine 16 angedeutet ist. Durch das Kanalsystem ist die Spritzkabine 16 mit einer Zu-/Abluft- und/oder Umluftanlage verbunden, die in jedem Verhältnis der Mischung Frischluft/Abluft/Umluft betrieben werden kann. In dieser Anlage findet die Luftkonditionierung statt.

Wie anhand der in Figur 4 gezeigten Vorderansicht der Spritzkabine 16 zu erkennen ist, ist deren Eingang 26 seitlich durch zwei vertikale Streben 48a und 48b, unten weitgehend durch die Bodenfläche 50 und oben durch eine horizontale Strebe 52 begrenzt.

Das Kabinentor 30 am Eingang 26 der Spritzkabine 16 umfasst ein erstes und ein zweites vertikales Rolltorblatt 54 bzw. 56 sowie ein horizontales Rolltorblatt 58. Die vertikalen Rolltorblätter 54 und 56 laufen oben und unten in einer Führungsstruktur 60 und einer diesen gemeinsamen vertikalen Führungsebene, welche senkrecht zur Transportrichtung 20 verläuft.

Mittels eines ersten Elektromotors 62 kann das erste vertikale Rolltorblatt 54 so in den Bereich des Eingangs 26 der Spritzkabine 16 hinein oder aus diesem heraus gefahren werden, dass sich sein vertikal verlaufender Außenrand 64 auf den entsprechenden gegenüberliegenden und parallel dazu verlaufenden vertikalen Außenrand 66 des zweiten vertikalen Rolltorblattes 56 zu oder von diesem weg bewegt, was durch einen Doppelpfeil 68 angedeutet ist. In entsprechender Weise kann das zweite vertikale Rolltorblatt 56 mittels eines zweiten Elektromotors 70 so verfahren werden, dass sich sein vertikal verlaufender Außenrand 66 relativ zu dem vertikalen Außenrand 64 des ersten vertikalen Rolltorblattes 54 bewegt. Dies ist durch den Doppelpfeil 72 veranschaulicht. Der jeweils nicht im Bereich des Eingangs 26 der Spritzkabine 16 befindliche Abschnitt der Rolltorblätter 54, 56 ist auf einer hier nicht zu erkennende vertikalen Welle aufgewickelt.

Wenn die beiden Elektromotoren 62 und 68 synchron und in gleicher Richtung betrieben werden, verändert sich der Abstand zwischen den sich gegenüberliegenden Außenrändern 64 und 66 der vertikalen Rolltorblätter 54 bzw. 56 nicht. Auf diese Weise kann jedoch die Lage des zwischen den Rolltorblättern 54, 56 und 58 verbleibenden Durchganges 74 relativ zu den durch die vertikalen Streben 48a, 48b vorgegebenen seitlichen Begrenzungen des Eingangs 26 der Spritzkabine 16 verändert werden.

In vertikaler Richtung können die Abmessungen des Durchgangs 74 durch das horizontale Rolltorblatt 58 verändert werden. Dazu läuft dieses seitlich in einer Führungsstruktur 76 und kann mittels eines dritten Elektromotors 78 in vertikaler Richtung in den Bereich des Eingangs 26 hinein und aus diesem heraus gefahren werden, so dass sich der untere Außenrand 80 des horizontalen Rolltorblattes 58 nach unten oder nach oben bewegt. Dies ist durch den Doppelpfeil 82 dargestellt.

Das vertikale Rolltorblatt 54 verschließt stets den Bereich zwischen seinem Außenrand 64 und der vertikalen Strebe 48a, das vertikale Rolltorblatt 56 verschließt stets den Bereich zwischen seinem Außenrand 66 und der vertikalen Strebe 48b und das horizontale Rolltorblatt 58 verschließt stets den Bereich zwischen seinem Außenrand 80 und der horizontalen Strebe 52.

Durch die Verfahrmöglichkeiten der Rolltorblätter 54, 56 und 58 entsprechend der Doppelpfeile 68, 72 bzw. 82 kann die Außenkontur des zwischen den Rolltorblättern 54, 56 und 58 verbleibenden Durchgangs 74 verändert werden. Darauf wird weiter unten nochmals eingegangen.

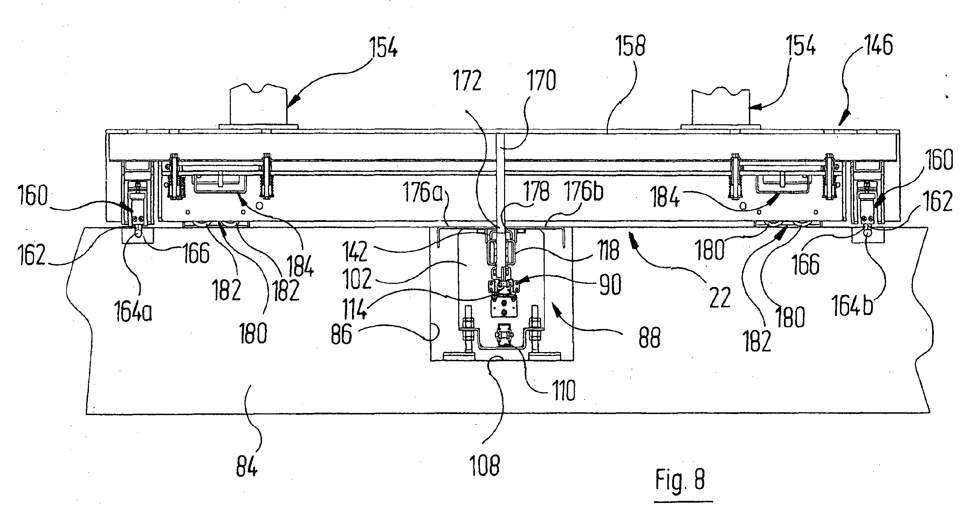

Der Bodengrund 84 der Anlage 10 weist mittig einen nach oben offenen Bodenkanal 86 auf (vgl. Figuren 4 und 8), welcher sich entlang des Zuführbereichs 14, der Spritzkabine 16 und des Verbringungsraumes 18 erstreckt. In dem Bodenkanal 86 ist eine Antriebseinrichtung 88 des Fördersystems 22 angeordnet.

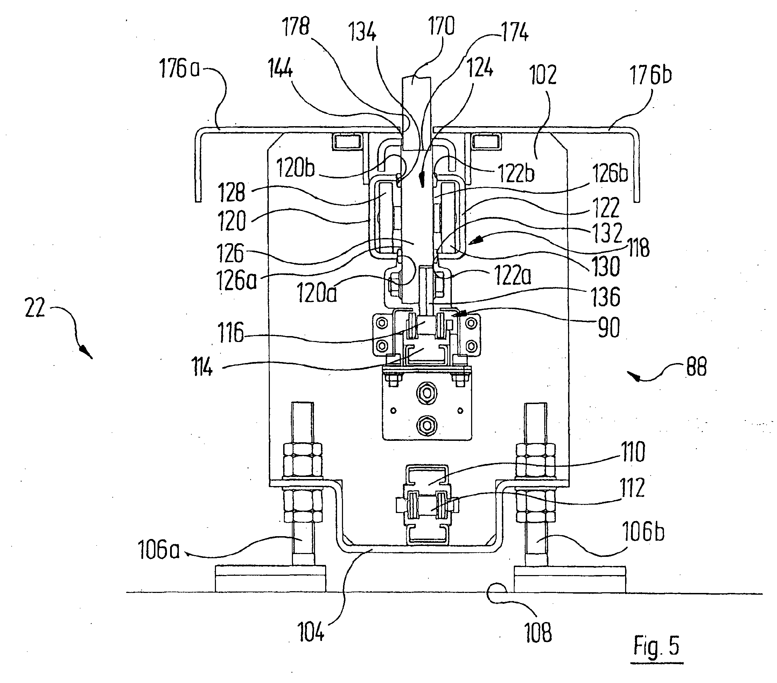

Die Antriebseinrichtung 88 umfasst als Zug- oder Schubmittel eine in den Figuren 5, 7, und 8 zu erkennende, endlose Förderkette 90, welche zwischen einer Spannstation 92, die in Transportrichtung 20 vor der Spritzkabine 16 in einem erweiterten Abschnitt 94 des Bodenkanals 86 angeordnet ist, und einer Antriebsstation 96 umläuft, welche in Transportrichtung 20 hinter der Spritzkabine 16 in einem erweiterten Abschnitt 98 des Bodekanals 86 angeordnet ist (vgl. Figur 1). Solche Spannstationen und solche Antriebsstationen sind aus dem Stand der Technik bekannt und erfordern daher keine weitere Erläuterung.

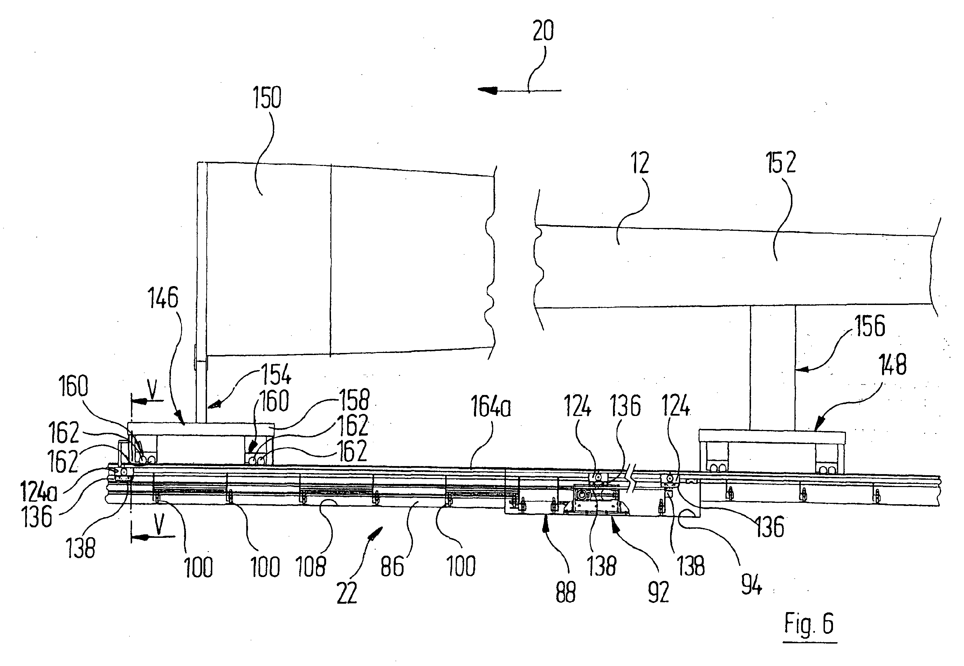

Wie insbesondere in Figur 6 zu sehen ist, umfasst die Antriebseinrichtung 88 ferner mehrere Stützstrukturen 100, die in Transportrichtung 20 unter Einhaltung eines Abstandes aufeinander folgend angeordnet sind und von denen eine in Figur 5 zu erkennen ist. Die Stützstruktur 100 umfasst eine Tragplatte 102 aus beispielsweise Stahlblech, welche senkrecht zur Transportrichtung 20 angeordnet ist und auf einem gekanteten Tragblech 104 ruht, welches seinerseits auf zwei kurze Stützpfeiler 106a, 106b montiert ist, die in an und für sich bekannter Weise auf dem Kanalgrund 108 des Bodenkanals 86 verankert sind.

Von unten nach oben trägt die Tragplatte 102 der Stützstruktur 100 eine untere Kettenschiene 110, welche das untere Trum 112 der Förderkette 90 führt, und eine parallel dazu verlaufende obere Kettenschiene 114, welche das obere Trum 116 der Förderkette 90 führt. Die Kettenschienen 110 und 114 erstrecken sich zwischen der Spannstation 92 und der Antriebsstation 96 der Antriebseinrichtung 88. Das untere Trum 112 und das obere Trum 116 der Förderkette 90 erstrecken sich zwischen einem nicht dargestellten Umlaufritzel an der Spannstation 92 und einem ebenfalls nicht dargestellten, angetriebenen Umlaufritzel an der Antriebsstation 96. Die Erstreckung des oberen Trums 116 der Förderkette 90 definiert eine Antriebswegstrecke, entlang welcher das Rotorblatt 12 zum Vortrieb desselben mit der Förderkette 90 gekoppelt werden kann, was weiter unten noch näher erläutert wird.

Das obere Trum 116 der Förderkette 90 und damit die Antriebswegstrecke ist somit mindestens so lang wie der Abstand zwischen dem Eingang 26 und Ausgang 28 der Spritzkabine 16 und zuzüglich der doppelten Erstreckung des Mitnehmerkamms 136 der Mitnehmerwagen 124 in Transportrichtung 20.

Oberhalb der oberen Kettenschiene 114 trägt die Tragplatte 102 außerdem eine Führungsschiene 118, welche aus zwei C-Profilen 120, 122 gebildet ist. Die C-Profile 120, 122 sind so angeordnet, dass sich deren Längsränder 120a, 120b bzw. 122a, 122b unter Einhaltung eines Abstandes gegenüberliegen. Die Führungsschiene 118 erstreckt sich entlang der gesamten Anlage 10 mit Zuführbereich 14, Spritzkabine 16 und Verbringungsraum 18.

Zwischen den Längsrändern 120a, 120b bzw. 122a, 122b der C-Profile 120, 122 sind entlang der Führungsschiene 118 mehrere Mitnehmerwagen 124 angeordnet, welche eine Wagenplatte 126 umfassen, die parallel zur Transportrichtung 20 in einer vertikalen Ebene verläuft. Auf jeder Flächenseite 126a, 126b trägt die Wagenplatte 126 jeweils eine Tragrolle 128 bzw. 130, welche um eine horizontale Achse verdrehbar gelagert sind. Die Tragrollen 128, 130 laufen auf dem jeweiligen, nicht eigens mit einem Bezugzeichen versehenen, unteren Schenkel der C-Profile 120, 122 ab.

Die Wägenplatte 126 trägt außerdem eine untere Führungsrolle 132 und eine obere Führungsrolle 134, welche jeweils um eine vertikale Achse verdrehbar gelagert sind. Die Führungsrollen 132, 134 stehen zu beiden Flächenseiten 126a, 126b der Wagenplatte 126 über diese über und sind in vertikaler Richtung auf einer Höhe angeordnet, dass die untere Führungsrolle 132 auf einem der unteren Außenränder 120a oder 122a der C-Profile 120 bzw. 122 ablaufen kann, wogegen die obere Führungsrolle 134 auf einem von deren oberen Außenrändern 120b, 122b ablaufen kann. Dadurch ist ein seitliches Verkippen des Mitnehmerwagens 124 verhindert.

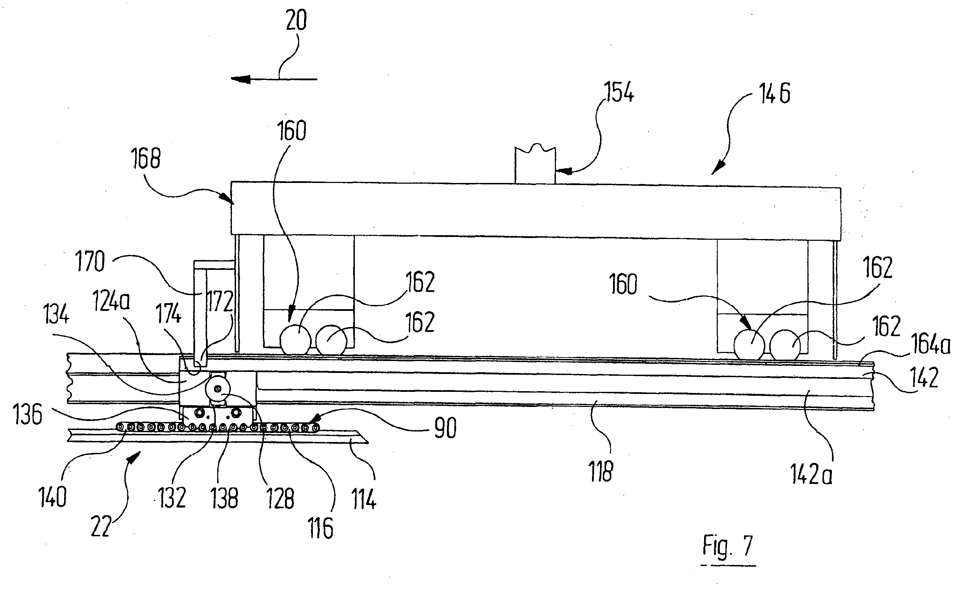

Die Wagenplatten 126 der einzelnen Mitnehmerwagen 124 tragen einen vertikal nach unten ragenden Mitnehmerkamm 136 mit mehreren Zinken 138. Diese sind in den Figuren 6 und 7 gut zu erkennen, wobei dort jeweils nur ein Zinken 138 mit einem Bezugszeichen versehen ist. Der Mitnehmerkamm 126 weist eine solche Geometrie auf, dass er mit seinen Zinken 138 in die Kettenglieder 140 der Förderkette 90 der Antriebseinrichtung 88 eingreift, wenn der Mitnehmerwagen 124 sich über der Förderkette 90 befindet. Dies ist in Figur 7 am Beispiel des in Transportrichtung vordersten Mitnehmerwagens 124a gezeigt, in welcher lediglich ein Teilabschnitt des oberen Trums 116 der Förderkette 90 im Detail gezeigt ist, welches auf der oberen Kettenschiene 114 läuft. Auf diese Weise wird jeder sich über der Förderkette 90 befindliche Mitnehmerwagen 124 von dem oberen Trum 116 der Förderkette 90 mitgenommen und entsprechend der Drehrichtung der Förderkette 90 entlang der Führungsschiene 118 verfahren.

Die einzelnen Mitnehmerwagen 124 sind über eine beim vorliegenden Ausführungsbeispiel im Querschnitt U-förmige Schubstrebe 142 starr miteinander verbunden, wobei die Mitnehmerwagen 124 in gleichmäßigem Abstand voneinander angeordnet sind. Dazu ist die Schubstrebe 142 an der jeweiligen nach oben weisenden Schmalfläche 144 der Wagenplatte 126 (vgl. Figur 5) jedes Mitnehmerwagens 124 befestigt. In dem Bereich zwischen zwei benachbarten Mitnehmerwagen 124 ist die Schubstrebe 142 verstärkt und umfasst dort an beiden Seiten angeformte Profile, von denen in Figur 7 ein Profil 142a zu erkennen ist. Die Schubstrebe 142 und der Mitnehmerwagen 124 bilden somit gemeinsam einen Förderschlitten 143.

Die Schubstrebe 142 hat in etwa die Länge des jeweils zu behandelnden Gegenstandes, im vorliegenden Fall somit in etwa die Länge des Rotorblattes 12, wobei am seinem in Transportrichtung 20 vorderen Ende der vorderste Mitnehmerwagen 124a und an seinem in Transportrichtung 20 hinterem Ende ein hinterster Mitnehmerwagen 124, der in den Figuren nicht zu erkennen ist, angebracht ist. Der entsprechende hinterste Mitnehmerwagen 124 ist somit unterhalb des in Transportrichtung 20 hinteren Endes des Rotorblatts 12 angeordnet.

Das Fördersystem 22 der Anlage 10 umfasst außerdem einen in Transportrichtung 20 betrachtet vorauseilenden Transportwagen 146 und einen in Transportrichtung 20 nacheilenden Transportwagen 148, welche das Rotorblatt 12 an dessen Befestigungsende 150 bzw. an dessen gegenüberliegenden freien Endbereich 152 aufnehmen. Dazu weisen die Transportwagen 146 und 148 entsprechende Haltestrukturen 154 bzw. 156 auf, die jedoch hier nicht weiter interessieren.

Wie in den Figuren 6 bis 9 zu erkennen ist, umfasst der vorauseilende Transportwagen 146 eine Rahmenstruktur 158, welche insgesamt vier Rollenpaare 160 lagert, die jeweils zwei hintereinander angeordnete Laufrollen 162 umfassen, die um horizontale Drehachsen verdrehbar sind, welche senkrecht zur Transportrichtung 20 stehen. Mit zwei Rollenpaaren 160 läuft der Transportwagen auf einem ersten Schienenstrang 164a ab, der in Transportrichtung 20 links neben dem Bodenkanal 86 verläuft. Mit den anderen beiden der vier Rollenpaare 160 läuft der der Transportwagen 146 auf einem zweiten Schienenstrang 164b ab, der in Transportrichtung 20 rechts neben dem Bodenkanal 86 verläuft (vgl. Figur 8).

Die Schienenstränge 164a, 164b sind als Rundschienen mit kreisförmigem Querschnitt ausgebildet, weshalb die Laufrollen 162 eine im Querschnitt dazu komplementär kreisbogenförmige Lauffläche 166 aufweisen, mit welcher sie auf dem jeweiligen Schienenstrang 164a oder 164b aufliegen.

An der in Transportrichtung 20 weisenden Vorderseite 168 des vorauseilenden Transportwagens 146 ist eine Koppelstange 170 angebracht, welche vertikal nach unten ragt (vgl. Figur 7). Die Koppelstange 170 greift mit ihrem unteren Ende 172 in eine dazu komplementäre Ausnehmung 174 in der Schubstrebe 142 ein, welche etwa mittig über dem in Transportrichtung 20 vordersten Mitnehmerwagen 124a angeordnet ist. Auf diese Weise ist der vorauseilende Transportwagen 146 mit der Schubstrebe 142 gekoppelt.

Wie insbesondere in den Figuren 5 und 8 zu erkennen ist, ist der Bodenkanal 86 oben weitgehend von zwei Abdeckblechen 176a, 176b abgedeckt, zwischen denen ein Durchgangsschlitz 178 verbleibt, durch welchen die Koppelstange 170 des vorauseilenden Transportwagens 146 nach unten zu der Schubstrebe 142 hindurch ragt.

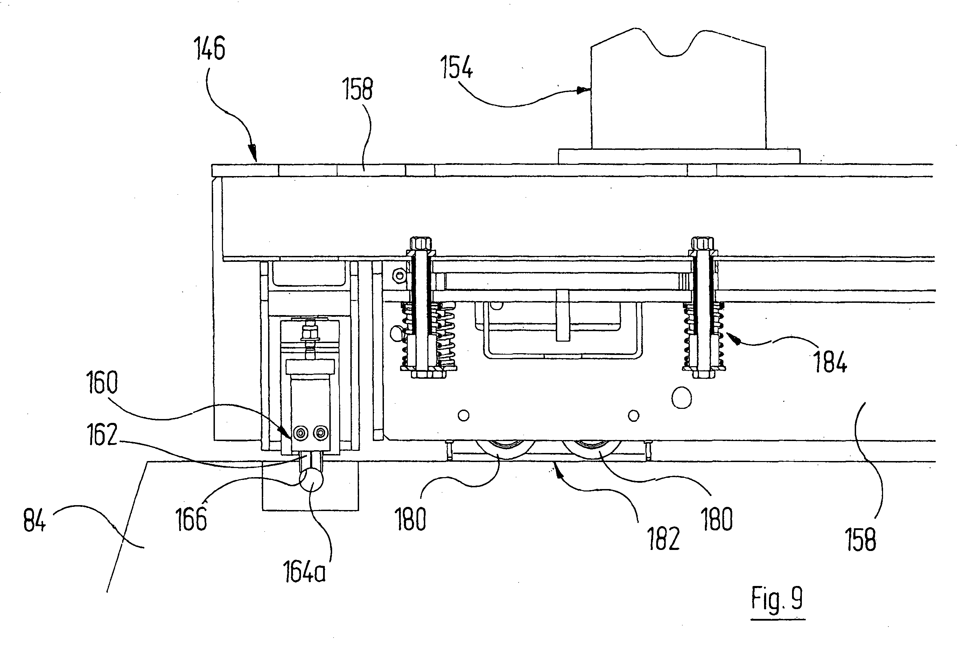

Der Transportwagen 146 kann nicht nur auf den Schienensträngen 164a, 164b in Transportrichtung 20 oder in dazu entgegengesetzte Richtung verfahren werden, sondern kann auch quer dazu verschoben werden. Zu diesem Zweck umfasst der Transportwagen 146 vier Rollenpaare 180 mit je zwei Rollen 182, deren horizontale Drehachse jeweils senkrecht zu den Drehachsen der Laufrollen die jeweils zwei hintereinander angeordnete Laufrollen 162 umfassen, was in den Figuren 8 und 9 zu erkennen ist. Jeweils ein Rollenpaar 180 ist in jedem Eckbereich der Rahmenstruktur 158 des Transportwagens 146 und gegenüber den Laufrollen 162 nach innen versetzt angeordnet.

Die Rollen 182 können mittels einer einem jeweiligen Rollenpaar 180 zugeordneten, hier jedoch nicht weiter interessierenden Hub-/Senkeinrichtung 184 (vg. Figuren 8 und 9) gegenüber der Rahmenstruktur 158 des Transportwagens 146 nach unten ausgefahren und wieder eingefahren werden. Wenn die Rollen 182 nach unten ausgefahren sind, nehmen diese die Last der Rahmenstruktur 158 und des auf dieser angebrachten Rotorblattes 12 auf, wobei die Laufrollen 162 von den Schienensträngen 164a, 164b abgehoben sind und sich oberhalb des Bodenniveaus befinden. In dieser Stellung kann der Transportwagen 146 auf den Rollen 182 senkrecht zur Transportrichtung 20 verfahren werden, wozu wahlweise ein entsprechendes Schienensystem für die Rollen 182 vorhanden sein kann, wie es an und für sich bekannt ist.

Der nacheilende Transportwagen 148 unterscheidet sich von dem vorauseilenden Transportwagen 146 lediglich dadurch, dass dort keine Koppelstange 170 vorgesehen ist.

Die oben beschriebene Anlage 10 funktioniert wie folgt:
Das Rotorblatt 12, welches in der Spritzkabine 16 mit einem Lack versehen werden soll, wird an seinem Befestigungsende 150 mit der Haltestruktur 154 des vorauseilenden Transportwagens 146 und an seinem gegenüberliegenden Endbereich 152 mit der Haltestruktur 156 des nacheilenden Transportwagens 148 verbunden.

Wenn die Transportwagen 146 und 148 sich nicht bereits im Zuführbereich 14 vor der Spritzkabine 16 befinden, werden sie mit dem Rotorblatt 12 dorthin verfahren, wozu die oben angesprochene Möglichkeit genutzt werden kann, die Transportwagen 146 und 148 quer zur Transportrichtung 20 verfahren zu können. Im Zuführbereich 14 werden die Transportwagen 146 und 148 mit ihren Laufrollen 162 über die Schienenstränge 162a, 162b verbracht, wobei die Rollenpaare 180 mittels der jeweiligen Hub-/Senkeinrichtung 184 ihre ausgefahrene Stellung einnehmen. Die Transportwagen 146, 148 werden dabei so positioniert, dass sich die Koppelstange 170 des vorauseilenden Transportwagens 146 in Transportrichtung 20 hinter der Spannstation 92 befindet.

Dann wird die Schubstrebe 142 unterhalb des Rotorblattes 12 so positioniert, dass das freie Ende 172 der Koppelstange 170 des vorauseilenden Transportwagens 146 über der Ausnehmung 174 der Schubstrebe 142 zu liegen kommt. Dazu wird die Förderkette 90 mittels der Antriebsstation 96 entsprechend in eine der möglichen Umlaufrichtungen angetrieben. Die sich über ihren Mitnehmerkamm 136 im Eingriff mit der Förderkette 90 befindlichen Mitnehmerwagen 124 werden von der Förderkette 90 in die entsprechende Richtung mitgenommen, wodurch die Schubstrebe 142 entlang der Führungsschiene 118 verfahren wird.

Nun werden die Rollenpaare 180 mittels der jeweiligen Hub-/Senkeinrichtung 184 eingefahren, so dass sich die Transportwagen 146 und 148 mit ihren Tragrollen 162 auf die Schienenstränge 164a, 164b absenken und zugleich die Koppelstange 170 mit ihrem unteren Ende 172 in die Ausnehmung 174 der Schubstrebe 142 eingreift. Der vorauseilende Transportwagen 146 ist so mit der Schubstrebe 142 gekoppelt. Der nacheilende Transportwagen 148 ist seinerseits über das Rotorblatt 12 mit dem vorauseilenden Transportwagen 146 verbunden.

Sodann wird die Förderkette 90 mittels der Antriebsstation 96 derart angetrieben, dass sich ihr oberes Trum 116 in Transportrichtung 20 bewegt. Die Förderkette 90 nimmt den mit ihr in Eingriff befindlichen vordersten Mitnehmerwagen 124a in Transportrichtung 20 mit. Durch die Verbindung des vorderen Mitnehmerwagens 124a mit der Schubstrebe 142 und deren Kopplung mit dem vorauseilenden Transportwagen 146 wird dieser sowie der nacheilende Transportwagen 148 mit dem Rotorblatt 12 ebenfalls in Transportrichtung bewegt.

Wenn der vorauseilende Transportwagen 146 den Eingang 26 der Spritzkabine 16 erreicht, wird der Durchgang 74 zwischen den Rolltorblättern 54, 56 und 58 des bis zu diesem Zeitpunkt geschlossenen Kabinentores 30 so weit verbreitert, dass der Transportwagen 146 hindurch passt. Dazu werden die vertikalen Rolltorblätter 54 und 56 mittels der Elektromotoren 62 und 70 in eine passende Stellung gefahren. Die Höhe des Durchgangs 74 wird an die Höhe des Befestigungsendes 150 des Rotorblattes 12 angepasst, indem das horizontale Rolltorblatt 58 mittels des Elektromotors 78 in eine passende Stellung gebracht wird.

Sobald der vorauseilende Transportwagen 146 das Kabinentor 30 am Eingang 26 der Spritzkabine 16 passiert hat, werden die vertikalen Rolltorblätter 54 und 56 so weit aufeinander zu gefahren, dass deren Außenränder 64 und 66, die den Durchgang 74 seitlich begrenzen, dicht neben dem Rotorblatt 12 zu liegen kommen. Bei der Durchfahrt des Rotorblatts 12 durch den Eingang 26 der Spritzkabine 16 werden die Rolltorblätter 54, 56 und 58 durch eine entsprechende Ansteuerung der Elektromotoren 62, 70 und 78 jeweils in eine solche Stellung gebracht, dass der Durchgang 74 am Eingang 26 der Spritzkabine 16 stets so gut wie möglich an die Querschnittsaußenkontur des Rotorblatts 12 angepasst ist. Die erforderliche Ansteuerung der Rolltorblätter 54, 56, 58 kann beispielsweise mittels eines Bilderfassungssystems berechnet werden. Auch ein vorprogrammierter Konturverlauf des Rotorblattes 12 in Verbindung mit einer Positionserfassung zumindest eines der Transportwagen 146, 148 kann als Grundlage für die Ansteuerung der Rolltorblätter 54, 56, 58 dienen.

Die Förderkette 90 wird durch die Antriebsstation 96 kontinuierlich angetrieben, so dass das Rotorblatt 12 gleichmäßig an den Applikationsrobotern 40, 42 in der Spritzkabine 16 vorbei gefahren werden, wobei es lackiert wird.

Wenn der vorauseilende Transportwagen 146 den Ausgang 28 der Spritzkabine 16 erreicht, wird das bis zu diesem Zeitpunkt geschlossene dortige Kabinentor 32 in derselben Art und Weise angesteuert, wie das Kabinentor 30 am Eingang 26 der Spritzkabine 16. Der entsprechende Durchgang des Ausgangs-Kabinentors 32 wird folglich stets so weit wie möglich an die Querschnitts-Außenkontur des Bereichs der Transportwagen 146, 148 oder des Rotorblattes 12 angepasst, welcher gerade das Kabinentor 32 am Ausgang 28 der Spritzkabine 16 passiert.

Während das Rotorblatt 12 in Transportrichtung 20 verfahren wird, gelangen nach und nach die dem vordersten Mitnehmerwagen 124a nacheilenden Mitnehmerwagen 124 zur Spannstation 90 und greifen dort über ihren Mitnehmerkamm 136 in das obere Trum 116 der Förderkette 90 ein. Die Schubstrebe 142 wird somit stets durch diejenigen Mitnehmerwagen 124 angetrieben, welche sich zwischen der Spannstation 90 und der Antriebsstation 92 befinden.

Nach einer gewissen Zeit erreicht der vorderste Mitnehmerwagen 124a die Antriebsstation 92 hinter der Spritzkabine 16 und wird über diese hinaus gefahren, da die Schubstrebe 142 über die nacheilenden Mitnehmerwagen 124 weiter von der Förderkette 90 angetrieben wird. Wenn der vorderste Mitnehmerwagen 124a in Transportrichtung 20 hinter die Antriebsstation 92 gelangt, greift sein Mitnehmerkamm 136 nicht mehr in die Förderkette 90 ein. Da sich die dem vordersten Mitnehmerwagen 124a nacheilenden Mitnehmerwagen 124 jedoch immer noch im Eingriff mit der Förderkette 90 befinden, wird der Vortrieb der Schubstrebe 142 und des damit gekoppelten vorauseilenden Transportwagens 146 aufrechterhalten, ohne dass es zu einer Geschwindigkeitsänderung kommt.

Entlang der durch das obere Trum 116 der Förderkette 90 vorgegebenen Antriebswegstrecke ist das Rotorblatt 12 über die Mitnehmerwagen 124 stets mit der Förderkette 90 gekoppelt. Insgesamt genügt es, dass sich ein einziger der Mitnehmerwagen 124 zwischen der Spannstation 90 und der Antriebsstation 92 der Förderkette 90 und damit im Eingriff mit dieser befindet, um einen kontinuierlichen und gleichmäßigen Vortrieb des Rotorblattes 12 aufrechtzuerhalten, obwohl die Antriebswegstrecke geringer ist als die Transportlänge des Rotorblatts 12.

Wenn das Rotorblatt 12 vollständig durch die Spritzkabine 16 gefördert worden ist, befindet es sich im Verbringungsraum 18. Die Schubstrebe 142 nimmt dort eine Position ein, in welcher der in Transportrichtung 20 hinterste Mitnehmerwagen 124 noch in die Förderkette 90 eingreift. Da dieser unterhalb des in Transportrichtung 20 hinteren Endes des Rotorblatts 12 angeordnet ist, ist sichergestellt, dass das Rotorblatt 12 vollständig in den Verbringungsraum 18 hinein gefahren wurde.

Die von dem Rotorblatt 12 zurückgelegte Transportwegstrecke entspricht somit der Wegstrecke zwischen der Position des hintersten Mitnehmerwagens 124 zu Beginn der Förderung, als das Rotorblatt 12 in dem Zuführbereich 14 angeordnet war, und der nun von dem hintersten Mitnehmerwagen 124 eingenommenen Position. Die Transportwegstrecke, die von dem Rotorblatt 12 zurückgelegt werden kann, ist somit länger als die Antriebswegstrecke des Fördersystems 22, welche durch das obere Trum 116 der Förderkette 90 vorgegeben ist.

Das Rotorblatt 12 wird aus dem Verbringungsraum 18 heraus gefördert, indem die Rollenpaare 180 mittels der Hub-/Senkeinrichtung 184 ausgefahren werden, wodurch die Transportwagen 146 und 148 von den Schienensträngen 164a, 164b abgehoben werden. Dann können die Transportwagen 146, 148 mit dem nun beschichteten Rotorblatt 12 quer zur Transportrichtung 20 verfahren werden und dieses einer weiteren Bearbeitung oder Behandlung zugeführt werden.

Die Förderkette 90 wird nun in die entgegengesetzte Umlaufrichtung angetrieben, wodurch die Schubstrebe 142 entgegen der Transportrichtung 20 zum Zuführbereich 14 zurück gefahren wird. Dort kann die Schubstrebe 142 wieder in der oben erläuterten Weise mit einem Transportwagen 146 mit Koppelstange 170 gekoppelt werden, der ein noch unbehandeltes Rotorblatt 12 trägt. Dieses kann dann in der oben erläuterten Weise durch die Spritzkabine 16 geführt und dort lackiert werden.

## Patentansprüche

1. Anlage zur Oberflächenbehandlung von Gegenständen mit
a) einer Behandlungskabine (16) mit einem Eingang (26) und einem Ausgang (28);
b) einem Fördersystem (22), welches Zug- oder Schubmittel (90) umfasst, mittels welcher ein Gegenstand (12) im Durchlauf in einer Transportrichtung (20) durch die Behandlungskabine (16) förderbar ist und dabei eine Transportwegstrecke zurücklegt;
wobei
c) der Gegenstand (12) in Transportrichtung (20) eine ihm zugeordnete Transportlänge vorgibt,
d) die Zug- oder Schubmittel (90) in Transportrichtung (20) eine Antriebswegstrecke (116) vorgeben;
**dadurch gekennzeichnet, dass**
d) das Fördersystem (22) eine Koppeleinrichtung (124, 142, 146) umfasst, mittels welcher der Gegenstand (12) entlang der Antriebswegstrecke (116) mit den Zug- oder Schubmitteln (90) koppelbar ist;
e) die Antriebswegstrecke (116) in Transportrichtung (20) kürzer als die Transportlänge des Gegenstandes (12) ist;
f) die Koppeleinrichtung (124, 142, 146) so eingerichtet ist, dass die von dem Gegenstand (12) zurücklegbare Transportwegstrecke länger als die Antriebswegstrecke ist.

2. Anlage nach Anspruch 1, **dadurch gekennzeichnet, dass**
die Zug- oder Schubmittel (90) als umlaufende Förderkette (90) ausgebildet sind, wobei die Antriebswegstrecke (116) durch wenigstens einen Bereich eines Trums (116) der Förderkette (90) vorgegeben ist.

3. Anlage nach Anspruch 1 oder 2, **dadurch gekennzeichnet,**
**dass** die Koppeleinrichtung (124, 142, 146) einen Förderschlitten (124, 142) umfasst, welcher
a) in Transportrichtung (20) länger als die Antriebswegstrecke ist;
b) mehrere Mitnehmerelemente (136) umfasst, die in Transportrichtung (20) entlang des Förderschlittens (124, 142) voneinander beabstandet angeordnet sind und mit den Zug- oder Schubmitteln (90) zusammenarbeiten können;
c) in einer Führungsstruktur (118) in Transportrichtung (20) verfahrbar ist.

4. Anlage nach Anspruch 3, **dadurch gekennzeichnet, dass**
der Förderschlitten (124, 142) eine Länge hat, die in etwa der Transportlänge des Gegenstands (12) entspricht.

5. Anlage nach Anspruch 3 oder 4, **dadurch gekennzeichnet,**
**dass** das Fördersystem (22) wenigstens einen den Gegenstand (12) aufnehmenden Transportwagen (146, 148) umfasst, welcher seinerseits mit dem Förderschlitten (124, 142) verbindbar ist.

6. Anlage nach einem der Ansprüche 1 bis 5, **dadurch gekennzeichnet, dass** die Behandlungskabine (16) an ihrem Eingang (26) und/oder an ihrem Ausgang (28) ein Kabinentor (30, 32) aufweist, welches wenigstens ein in einer ersten Richtung (68, 72) verfahrbares Torblatt (54, 56), insbesondere ein Rolltorblatt (54, 56), und wenigstens ein in einer zweiten Richtung (82) verfahrbares Torblatt (58), insbesondere ein Rolltorblatt (58), umfasst.

7. Anlage nach Anspruch 6, **dadurch gekennzeichnet, dass**
die erste Richtung (68, 72) vertikal und die zweite Richtung (82) horizontal verläuft.

8. Anlage nach Anspruch 6 oder 7, **dadurch gekennzeichnet,**
**dass** zwei Torblätter (54, 56) vorhanden sind, die in der ersten Richtung (68, 72) verfahrbar sind.

## Claims

1. System for the surface treatment of objects, having
a) a treatment booth (16) with an entry (26) and an exit (28);
b) a conveying system (22) which includes pulling or pushing means (90) by means of which an object (12) may be conveyed by passing through the treatment booth (16) in a direction of transport (20), and in so doing covers a transport distance;
in which
c) the object (12) predetermines a transport length that is associated therewith in the direction of transport (20), and
d) the pulling or pushing means (90) predetermine a drive distance (116) in the direction of transport (20);
**characterised in that**
d) the conveying system (22) includes a coupling means (124, 142, 146) by means of which the object (12) may be coupled to the pulling or pushing means (90) along the drive distance (116) ;
e) the drive distance (116) is shorter in the direction of transport (20) than the transport length of the object (12); and
f) the coupling means (124, 142, 146) is set up such that the transport distance to be covered by the object (12) is longer than the drive distance.

2. System according to Claim 1, **characterised in that** the pulling or pushing means (90) take the form of a circulating conveyor chain (90), with the drive distance (116) predetermined by at least one region of one side (116) of the conveyor chain (90).

3. System according to Claim 1 or 2, **characterised in that** the coupling means (124, 142, 146) includes a conveying slide (124, 142) which
a) is longer in the direction of transport (20) than the drive distance;
b) includes a plurality of entraining elements (136) which are arranged along the conveying slide (124, 142) spaced from one another in the direction of transport (20) and may cooperate with the pulling or pushing means (90) ; and
c) is movable in the direction of transport (20) in a guide structure (118).

4. System according to Claim 3, **characterised in that** the conveying slide (124, 142) is of a length corresponding approximately to the transport length of the object (12).

5. System according to Claim 3 or 4, **characterised in that** the conveying system (22) includes at least one transport carriage (146, 148) which receives the object (12) and which is itself connectable to the conveying slide (124, 142).

6. System according to one of Claims 1 to 5, **characterised in that** the treatment booth (16) has at its entry (26) and/or at its exit (28) a booth gate (30, 32) which includes at least one gate leaf (54, 56) that is movable in a first direction (68, 72), in particular a roller gate leaf (54, 56), and at least one gate leaf (58) that is movable in a second direction (82), in particular a roller gate leaf (58).

7. System according to Claim 6, **characterised in that** the first direction (68, 72) runs vertically and the second direction (82) runs horizontally.

8. System according to Claim 6 or 7, **characterised in that** two gate leaves (54, 56) which are movable in the first direction (68, 72) are provided.

## Revendications

1. Installation de traitement de surfaces d'objets, comprenant
a) une cabine de traitement (16) dotée d'une entrée (26) et d'une sortie (28) ;
b) un système de convoyage (22) incluant des moyens (90) de traction ou de poussée à l'aide desquels un objet (12), en défilement dans une direction de transport (20), peut être convoyé à travers ladite cabine de traitement (16) en parcourant alors un trajet d'acheminement ;
sachant que
c) ledit objet (12) préétablit, dans la direction de transport (20), une longueur d'acheminement qui lui est affectée, et que
d) lesdits moyens (90) de traction ou de poussée préétablissent un trajet d'entraînement (116) dans ladite direction de transport (20),
**caractérisée par le fait que**
e) le système de convoyage (22) inclut un dispositif d'accouplement (124, 142, 146) à l'aide duquel l'objet (12) peut être accouplé aux moyens (90) de traction ou de poussée, le long du trajet d'entraînement (116) ;
f) ledit trajet d'entraînement (116) est plus court que la longueur d'acheminement dudit objet (12), dans la direction de transport (20) ;
g) ledit dispositif d'accouplement (124, 142, 146) est agencé de façon telle que le trajet d'acheminement, pouvant être parcouru par ledit objet (12), soit plus long que ledit trajet d'entraînement.

2. Installation selon la revendication 1, **caractérisée par le fait que** les moyens (90) de traction ou de poussée sont réalisés sous la forme d'une chaîne convoyeuse (90) en révolution, le trajet d'entraînement (116) étant préétabli par au moins une région d'un brin (116) de ladite chaîne convoyeuse (90).

3. Installation selon la revendication 1 ou 2, **caractérisée par le fait que** le dispositif d'accouplement (124, 142, 146) inclut un chariot de convoyage (124, 142) qui
a) est plus long que le trajet d'entraînement, dans la direction de transport (20) ;
b) comprend plusieurs éléments d'entraînement (136) placés à distance les uns des autres le long dudit chariot de convoyage (124, 142), dans ladite direction de transport (20), et pouvant coopérer avec les moyens (90) de traction ou de poussée ;
c) peut être déplacé dans une structure de guidage (118), dans ladite direction de transport (20).

4. Installation selon la revendication 3, **caractérisée par le fait que** le chariot de convoyage (124, 142) présente une longueur correspondant, approximativement, à la longueur d'acheminement de l'objet (12).

5. Installation selon la revendication 3 ou 4, **caractérisée par le fait que** le système de convoyage (22) inclut au moins un chariot de transport (146, 148) qui reçoit l'objet (12) et peut, à son tour, être relié au chariot de convoyage (124, 142).

6. Installation selon l'une des revendications 1 à 5, **caractérisée par le fait que** la cabine de traitement (16) est dotée, à son entrée (26) et/ou à sa sortie (28), d'une porte (30, 32) comprenant au moins un vantail (54, 56), notamment un vantail roulant (54, 56) pouvant être déplacé dans une première direction (68, 72), et au moins un vantail (58), notamment un vantail roulant (58) pouvant être déplacé dans une seconde direction (82).

7. Installation selon la revendication 6, **caractérisée par le fait que** la première direction (68, 72) s'étend verticalement, et la seconde direction (82) s'étend horizontalement.

8. Installation selon la revendication 6 ou 7, **caractérisée par** la présence de deux vantaux (54, 56) de porte, qui peuvent être déplacés dans la première direction (68, 72).
